# EUROPÄISCHE PATENTANMELDUNG

(11) **EP 2 225 977 A2**
(43) Veröffentlichungstag der Anmeldung: **08.09.2010**
(21) Anmeldenummer: 10150835.6
(22) Anmeldetag: 15.01.2010
(51) Int. Cl.: A47J 31/44

(54) **Getränkeautomat**

(30) Priorität: 20.01.2009 DE 102009000312
(71) Anmelder: BSH Bosch und Siemens Hausgeräte GmbH, 81739 München (DE)
(72) Erfinder: Daburger, Josef, 83313, Siegsdorf-Hammer (DE); Mathes, Anton, 83364, Neukirchen am Teisenberg (DE); Schneiderbauer, Gottfried, 84553, Halsbach (DE)

(57) **Zusammenfassung**

Die vorliegende Erfindung betrifft einen Getränkeautomat, insbesondere einen Kaffeevollautomaten. Erfindungswesentlich ist dabei, dass zumindest ein wärmempfindliches Bauteil (1), insbesondere ein Elektronikbauteil, zur verbesserten Kühlung wärmeübertragend mit einer vergleichsweise kalte Flüssigkeit führenden Leitung (2) verbunden und dadurch gekühlt ist.

## Beschreibung

Die vorliegende Erfindung betrifft einen Getränkeautomaten, insbesondere einen Kaffeevollautomaten, gemäß dem Oberbegriff des Anspruchs 1.

Moderne Getränkeautomaten, wie bspw. Kaffeevollautomaten, besitzen eine Vielzahl elektronischer Bauteile, bspw. Halbleiterelemente, die sich beim Betrieb des Getränkeautomaten durch den Stromdurchfluss erhitzen. Insbesondere unter ungünstigen Rahmenbedingungen, wie bspw. einem Dauerbetrieb, hohen Umgebungstemperaturen oder einer zu hohen Netzspannung, kann es dabei zu einem übermäßigen Erhitzen der elektronischen Bauteile des Getränkeautomaten kommen, was aufgrund der hohen thermischen Belastung zumindest langfristig zu deren Zerstörung führen kann. Üblicherweise werden wärme- bzw. hitzeempfindliche Bauteile, wie bspw. Elektronikbauteile, oftmals mit teuren Kühlkonturen versehen und zudem in ihrer Leistungsfähigkeit überdimensioniert. Vor allem letzteres kann die Elektronik dadurch merklich verteuern.

Aus der DE 195 04 470 B4 ist ein elektronischer Durchlauferhitzer mit Elektronikbauteilen bekannt, welche zu ihrer Kühlung thermisch an eine Zulaufleitung des Durchlauferhitzers angekoppelt sind.

Die vorliegende Erfindung beschäftigt sich mit dem Problem, für einen Getränkeautomaten der gattungsgemäßen Art, eine verbesserte oder eine alternative Ausführungsform anzugeben, mit welcher insbesondere die Langlebigkeit des Getränkeautomaten gesteigert werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein wärmeempfindliches Bauteil eines Getränkeautomaten, bspw. ein Elektronikbauteil, zur verbesserten Kühlung mit einer vergleichsweise kalte Flüssigkeit führenden Leitung des Getränkeautomaten, bspw. mit einer Kaltwasserleitung, wärmeübertragend zu koppeln. Die wärmeübertragende Kopplung kann dabei direkt oder indirekt über eine zwischengeschaltete und gut wärmeleitende Halteeinrichtung erfolgen. Die kalte Flüssigkeit führende Leitung muss dabei selbstverständlich keinen rohrförmigen Querschnitt aufweisen, sondern kann eine beliebige Außenkontur besitzen, an welche das wärmeempfindliche Bauteil entweder direkt oder wie im vorigen Satz erwähnt über die Wärme leitende Halteeinrichtung angebunden ist. Vorzugsweise ist dabei die kalte Flüssigkeit führende Leitung als Kaltwasserleitung ausgebildet, da eine derartige Kaltwasserleitung in nahezu jedem Getränkeautomat vorhanden ist. Durch die Anbindung des wärmeempfindlichen Bauteils, respektive des Elektronikbauteils, an die stets vergleichsweise kühle Leitung, kann das wärmeempfindliche Bauteil kostengünstig gekühlt werden, wodurch dessen Lebensdauer und damit die Lebensdauer des gesamten Getränkeautomaten gesteigert werden kann. Da beim Betrieb des Getränkeautomaten üblicherweise stets kalte Flüssigkeit durch die Leitung gepumpt wird, wird deren Mantel von der kalten Flüssigkeit kontinuierlich gekühlt, wobei diese Kühlwirkung über die wärmeleitende Halteeinrichtung oder direkt an das zu kühlende Elektronikbauteil übertragen werden kann. Die wärmeleitende Halteeinrichtung erfüllt dabei prinzipiell zwei wesentliche Funktionen, nämlich zum einen das Halten bzw. Fixieren des Bauteils an der Leitung und zum anderen die Kühlung des wärmeempfindlichen Bauteils, bspw. des Elektronikbauteils. Durch die erfindungsgemäße wärmeübertragende Kopplung zwischen dem zu kühlenden Bauteil und der Leitung, kann auf eine aufwendige und dadurch teure Kühlgeometrie oder sogar auf eine zusätzlich Kühleinrichtung zum Kühlen des zumindest einen wärmeempfindlichen Bauteils gänzlich verzichtet werden, wodurch die Herstellungskosten des Getränkeautomaten gesenkt werden können.

Bei einer vorteilhaften Weiterbildung der erfindungsgemäßen Lösung, ist die wärmeleitende Halteeinrichtung als Klammer ausgebildet. Die Klammer kann dabei einseitig oder zweiseitig klammern, wobei im ersten Falle die Klammer die kalte Flüssigkeit führende Leitung umklammert und das zu kühlende wärmeempfindliche Bauteil trägt. Im zweiten Fall erstreckt sich die klammernde Wirkung sowohl auf die Leitung als auch auf das wärmeempfindliche Bauteil, sodass die Klammer einerseits die Leitung und andererseits das wärmeempfindliche Bauteil umklammert und damit fixiert. Denkbar ist selbstverständlich auch, dass die Klammer das wärmeempfindliche Bauteil gegen die Leitung verspannt, sodass ein direkter Kontakt zwischen der kalte Flüssigkeit führenden Leitung und dem zu kühlenden wärmeempfindlichen Bauteil besteht.

Zweckmäßig ist zwischen dem zu kühlenden Bauteil und der kühlen Leitung ein wärmeleitendes Kontaktmittel angeordnet, welches eine flächige Anlage des Bauteils an der Leitung und damit einen hohen Wärmeübertrag ermöglicht und welches gleichzeitig als Kleber ausgebildet ist. In diesem Fall erfolgt eine direkte Anbindung des zu kühlenden Bauteils an die kühle Flüssigkeit führende Leitung, wobei das Kontaktmittel zwei Aufgaben gleichzeitig erfüllt. Zum einen fixiert es aufgrund seiner kleberartigen Wirkung das zu kühlende Bauteil an der Leitung und zum anderen sorgt es für eine hohe Wärmeübertragungsrate zwischen der Leitung und dem zu kühlenden Bauteil und dadurch für eine optimale Kühlung. Selbstverständlich kann ein derartiges wärmeleitendes Kontaktmittel auch zwischen einer Halteeinrichtung der kühlen Leitung vorgesehen werden, um die Wärmeübertragung insgesamt zu verbessern. Ein derartiges wärmeleitendes Kontaktmittel kann bspw. als aushärtendes Wärmeleitgel ausgebildet sein, welches durch seine aushärtende Wirkung das zu kühlende Bauteil an der Leitung fixiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine direkte Wärmekopplung eines wärmeempfindlichen Bauteils mit einer kalte Flüssigkeit führenden Leitung,
- Fig. 2: eine Darstellung wie in Fig. 1, jedoch unter Zwischenschaltung einer wärmeleitenden Halteeinrichtung.

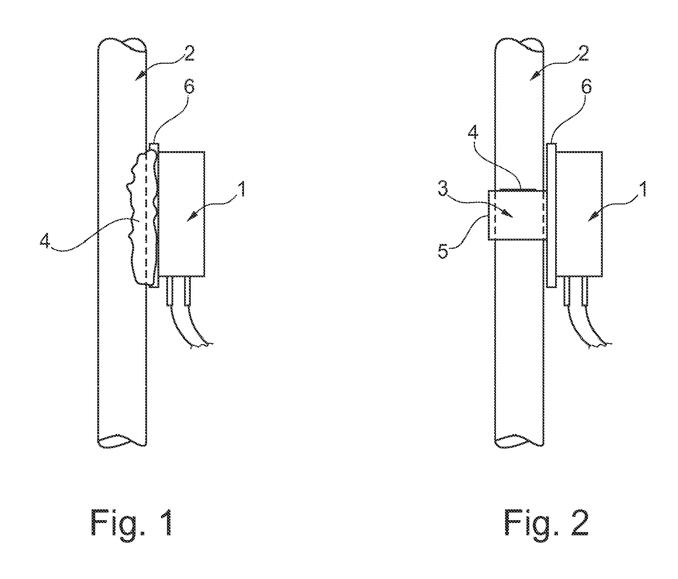

Entsprechend den Figuren 1 und 2, wird ein wärmeempfindliches Bauteil 1 wärmeübertragend mit einer kalte Flüssigkeit führenden Leitung 2 zur Kühlung des Bauteils 1 verbunden. Die kalte Flüssigkeit führende Leitung 2 kann bspw. eine Kaltwasserleitung in einem Getränkeautomaten sein, wogegen das wärmeempfindliche Bauteil 1 insbesondere als Elektronikbauteil ausgebildet sein kann. Da derartige Elektronikbauteile während des Betriebs stromdurchflossen sind und sich dadurch unter Umständen stark aufheizen, müssen diese für Funktionserhaltung oftmals gekühlt werden. Hierzu sind in heutigen Getränkeautomaten oftmals separate Kühleinrichtungen oder zumindest an dem jeweiligen wärmeempfindlichen Bauteil 1 angeordnete Kühlkonturen vorgesehen, was in beiden Fällen zu erhöhten Kosten führt. Werden derartige Kühlmaßnahmen nicht getroffen, kann es zu einem Überhitzen des wärmeempfindlichen Bauteils 1 und damit zu einem Ausfall desselben kommen.

Die wärmeübertragende Kopplung des wärmeempfindlichen Bauteils 1 mit der Leitung 2 kann dabei wahlweise direkt (vgl. Fig. 1) oder indirekt über eine Halteeinrichtung 3 (vgl. Fig. 2) erfolgen. Gemäß der Fig. 1 ist dabei das wärmeempfindliche Bauteil 1 über ein wärmeleitendes Kontaktmittel 4, welches zusätzlich als Kleber ausgebildet ist, wärmeübertragend mit der Leitung 2 gekoppelt. Ein derartiges Kontaktmittel 4 bewirkt dabei nicht nur eine Fixierung des wärmeempfindlichen Bauteils 1 an der Leitung 2, sondern zugleich auch eine flächige Verbindung zwischen diesen beiden Bauteilen und dadurch eine besonders gute Wärmeübertragung. Die kalte Flüssigkeit führende Leitung 2 kann - wie oben erwähnt - bspw. als Kaltwasserleitung eines Getränkeautomaten ausgebildet sein und ist in dieser Funktion in nahezu allen Getränkeautomaten anzutreffen. Durch die während des Betriebs des Getränkeautomaten ständig durch die Leitung 2 nachfließende kalte Flüssigkeit, wird die Leitung 2 kontinuierlich gekühlt und kann diese Kühlenergie kontinuierlich an das zu kühlende und wärmeempfindliche Bauteil 1 übertragen.

Im Unterschied zu Fig. 1, ist gemäß der Fig. 2 zwischen dem wärmeempfindlichen Bauteil 1 und der Leitung 2 die wärmeleitende Halteeinrichtung 3 angeordnet, welche neben einer guten Wärmeübertragung zwischen der Leitung 2 und dem Bauteil 1 zusätzlich auch eine Fixierung des Bauteils 1 an der Leitung 2 bewirkt. Die Halteeinrichtung 3 kann dabei bspw. als Klammer ausgebildet sein. Denkbar ist hierbei, dass die wärmeleitende Halteeinrichtung 3 als einseitige oder als zweiseitige Klammer ausgebildet ist. Gemäß der Fig. 2 ist dabei eine als einseitig ausgebildete Klammer dargestellte Halteeinrichtung 3 gezeigt, welche mit Federschenkel 5 die Leitung 2 umklammert und welche auf einer Konsole 6 das zu kühlende Bauteil 1 trägt. Die Verbindung zwischen dem Bauteil 1 und der Konsole 6 kann bspw. mittels einer Schraubverbindung oder mittels eines wärmeleitenden Klebers erfolgen. Denkbar ist selbstverständlich auch, dass die Halteeinrichtung 3 als zweiseitige Klammer ausgebildet ist, sodass weitere, nicht gezeigte, Federschenkel vorgesehen sind, welche das wärmeempfindliche Bauteil 1 umklammern und dadurch halten. Die Halteeinrichtung 3 kann dabei prinzipiell als Blechstanzteil ausgebildet sein und dadurch einerseits eine hohe Wärmeübertragung ermöglichen und andererseits kostengünstig gefertigt werden.

Generell kann das wärmeempfindliche Bauteil 1 als Halbleiter, als Thyristor, als Triak, als Spannungsregler, als Platine oder als Relais ausgebildet sein, wobei die vorstehende Aufzählung keinerlei Anspruch auf Vollständigkeit erhebt, sodass unter dem wärmeempfindlichen Bauteil 1 sämtliche Bauteile bzw. Komponenten zu subsumieren sind, welche zumindest bei einem Dauerbetrieb eine Kühlung erfordern.

Um auch bei der Verwendung einer Halteeinrichtung 3 einen möglichst flächigen Kontakt zwischen dieser und der Leitung 2 zu bekommen und damit einen hohen Wärmeübertrag zu ermöglichen, kann zwischen der Halteeinrichtung 3 und der Leitung 2 ebenfalls ein wärmeleitendes Kontaktmittel 4 vorgesehen sein.

Generell kann die Leitung 2 abweichend von der gemäß den Figuren 1 und 2 dargestellten Ausführungsform auch einen generell anderen Querschnitt bzw. andere Außenabmessungen aufweisen, wobei für die Erfindung lediglich wesentlich ist, dass das wärmeempfindliche und daher zu kühlende Bauteil 1 wärmeübertragend mit der kühle Flüssigkeit führenden Leitung 2 gekoppelt ist.

Generell lassen sich mit der erfindungsgemäßen Wärmekopplung zwischen dem zu kühlenden Bauteil 1 und der vergleichsweise kühlen Leitung 2 separate Kühleinrichtungen bzw. Kühlkonturen einsparen, wodurch die Herstellungskosten, bspw. eines Getränkeautomaten, deutlich reduziert werden können. Zugleich wird auch ein Energieverbrauch eines derartigen Getränkeautomaten verringert, da die Kühlung der wärmeempfindlichen Bauteile 1 nunmehr über die Leitung 2 und damit energieneutral erfolgt. Von besonderem Vorteil ist darüber hinaus, dass durch die kontinuierlich gekühlten Bauteile 1 deren Lebensdauer erhöht werden kann, was insbesondere im Hinblick auf die Herstellung qualitativ höchstwertiger Produkte einen entscheidenden Vorteil bringt.

### Bezugszeichenliste

- 1: wärmeempfindliches Bauteil
- 2: Leitung
- 3: Halteeinrichtung
- 4: Kontaktmittel
- 5: Federschenkel
- 6: Konsole

## Patentansprüche

1. Getränkeautomat, insbesondere ein Kaffeevollautomat, **dadurch gekennzeichnet, dass** zumindest ein wärmempfindliches Bauteil (1), insbesondere ein Elektronikbauteil, zur verbesserten Kühlung wärmeübertragend mit einer vergleichsweise kalte Flüssigkeit führenden Leitung (2) verbunden ist.

2. Getränkeautomat nach Anspruch 1, **dadurch gekennzeichnet, dass** das Bauteil (1) über eine wärmeleitende Halteeinrichtung (3) an der vergleichsweise kalte Flüssigkeit führenden Leitung (2) angebunden ist.

3. Getränkeautomat nach Anspruch 2, **dadurch gekennzeichnet, dass** die wärmeleitende Halteeinrichtung (3) als wärmeleitende Klammer ausgebildet ist.

4. Getränkeautomat nach Anspruch 2 oder 3, **dadurch gekennzeichnet, dass** die Halteeinrichtung (3) als Blechstanzteil ausgebildet ist.

5. Getränkeautomat nach einem der Ansprüche 1 bis 4, **dadurch gekennzeichnet, dass** das wenigstens eine wärmeempfindliche Bauteil (1) als Halbleiter, als Thyristor, als Triac, als Spannungsregler, als Platine oder als Relais ausgebildet ist.

6. Getränkeautomat nach einem der Ansprüche 1 bis 5, **dadurch gekennzeichnet, dass** die vergleichsweise kalte Flüssigkeit führende Leitung (2) als Kaltwasserleitung ausgebildet ist.

7. Getränkeautomat nach einem der Ansprüche 2 bis 6, **dadurch gekennzeichnet,**
- **dass** zwischen der Halteeinrichtung (3) und der vergleichsweise kalte Flüssigkeit führenden Leitung (2) ein wärmeleitendes Kontaktmittel (4) angeordnet ist, welches eine flächige Anlage der Halteeinrichtung (3) an der Leitung (2) und damit einen hohen Wärmeübertrag ermöglicht, oder
- **dass** zwischen dem Bauteil (1) und der vergleichsweise kalte Flüssigkeit führenden Leitung (2) ein wärmeleitendes Kontaktmittel (4) angeordnet ist, welches eine flächige Anlage des Bauteils (1) an der Leitung (1) und damit einen hohen Wärmeübertrag ermöglicht.

8. Getränkeautomat nach Anspruch 7, **dadurch gekennzeichnet, dass** das wärmeleitende Kontaktmittel (4) gleichzeitig als Kleber ausgebildet ist.
